# FASCICULE DE BREVET EUROPEEN

(11) **EP 1 206 661 B1**
(45) Date de publication et mention de la délivrance du brevet: **27.10.2004**
(21) Numéro de dépôt: 00958657.9
(22) Date de dépôt: 10.08.2000
(51) Int. Cl.: F16L 59/18

(54) **PROCEDE POUR REALISER SUR BARGE OU CHANTIER L'ASSEMBLAGE DE DEUX TUBES METALLIQUES D'UNE CONDUITE EN MER ET L'ISOLATION DE LA ZONE D'ASSEMBLAGE ET TUBES ADAPTES POUR CE PROCEDE**
VERFAHREN ZUM VERBINDEN ZWEIER METALLISCHER RÖHREN EINER LEITUNG AUF PLATTFORMEN ODER BAUSTELLEN AUF OFFENER SEE, ISOLATION DER VERBINDUNGSZONE UND ROHRE DIE DIESEM VERFAHREN ANGEPASST SIND
METHOD FOR PRODUCING ON A BARGE OR WORK SITE AN ASSEMBLY OF TWO METAL TUBES OF A SEA LINE AND INSULATING THE ASSEMBLY ZONE AND ADAPTED TUBES THEREFOR

(30) Priorité: 13.08.1999 FR 9910478
(43) Date de publication de la demande: 22.05.2002
(73) Titulaire: BOUYGUES OFFSHORE, 78180 Montigny-le-Bretonneux (FR)
(72) Inventeur: ROGER, Pierre, F-92270 Bois-Colombes (FR); VILA, Jacques, F-78180 Montigny-le-Bretonneux (FR)
(74) Mandataire: Schrimpf, Robert
(86) Numéro de dépôt international: PCT/FR2000/002289
(87) Numéro de publication internationale: WO 2001/013026

(56) Documents cités:
- EP-A- 0 017 254
- US-A- 3 402 731
- US-A- 4 441 743
- US-A- 4 804 210

## Description

L'invention concerne un procédé et un dispositif pour réaliser sur barge ou chantier l'assemblage de deux tubes d'une conduite en mer et l'isolation de la zone d'assemblage au moyen d'un revêtement extérieur isolant thermiquement, résistants à la pression extérieure et étanches à l'eau, obtenu par durcissement d'un produit appliqué sur les tubes.

Les publications US-A-4 804 210 et EP-A-0 017 254 décrivent l'assemblage de tubes comportant des revêtements isolants mais ces tubes ne font pas partie d'une conduite en mer.

Le temps nécessaire au durcissement du produit d'isolation et d'étanchéité est un handicap à la rapidité de la pose des tubes en mer.

Un but de la présente invention est d'éviter cet handicap.

On y parvient selon l'invention en utilisant des tubes métalliques assemblables mécaniquement jusque dans des positions relatives finales prédéterminées, en réalisant sur les extrémités d'assemblage des tubes métalliques, avant leur assemblage, des revêtements extérieurs d'isolation et d'étanchéité individuels conformés et dimensionnés en sorte que dans lesdites positions relatives finales prédéterminées les revêtements extérieurs des extrémités d'assemblage soient en continuité ou en quasi-continuité, et après assemblage, en comblent s'il y a lieu l'intervalle résiduel éventuel entre les revêtements au moyen d'une colle ou d'un mastic, caractérisé en ce que
- les revêtements sont conformés et dimensionnés pour pénétrer partiellement, l'un dans l'autre lors de l'assemblage en présentant des surfaces de recouvrement.

L'expression « assemblables mécaniquement » signifie assemblables par vissage ou par emboîtement (par opposition à un assemblage par soudage). Le mastic envisagé en extrémité d'assemblages est par exempte, à base de brai de houille ou de polyuréthanne.

Dans des modes de réallsatlon préférés :
- on utilise des revêtements en matériau élastomère pour les réalisations à recouvrement partiel.
- on protège provisoirement les surfaces de joint des revêtements au moyen de capuchons amovibles emboîtés dans ou sur les tubes et que l'on retire avant assemblage.
- après assemblage, on entoure la zone d'assemblage d'un manchon thermorétractable.
On décrira ci-après des modes de réalisation de tubes adaptés pour la mise en oeuvre du procédé, en référence aux figures du dessin joint sur lequel:
- la figure 1 est une coupe axiale des tubes, selon une première réalisation de l'invention, avant assemblage des tubes ;
- la figure 2 est une coupe axiale des tubes de la figure 1, après assemblage des tubes ;
- les figures 3 et 4 sont des vues analogues respectivement à celles des figures 1 et 2, dans le cas d'une variante de réalisation.

On a représenté sur les figures deux tubes de canalisation (T1. T2) à assembler par introduction et fixation d'une extrémité d'assemblage mâle d'un tube (T1) dit tube mâle, sur une certaine longueur, dans une extrémité d'assemblage femelle de l'autre tube (T2), dit tube femelle..

Dans les réalisations représentées, l'extrémité d'assemblage femelle est déterminée par une extrémité femelle (1a) d'un connecteur (1) intégré au tube femelle (T2) par exemple par vissage, tandis que l'extrémité d'assemblage mâle est déterminée par une extrémité (2) du tube mâle (T1) lui-même.

Par exemple l'extrémité d'assemblage femelle (1a) et l'extrémité d'assemblage mâle (2) présentent des filetages (3, 4) aptes à coopérer pour assurer par vissage l'assemblage des tubes.

II n'est pas nécessaire de décrire plus en détails le connecteur de type en soi connu qui est constitué par exemple d'une douille métallique déterminant deux volumes cylindriques ou tronconiques en opposition (1a, 1b) de part et d'autre d'un anneau de butée (1c), pour recevoir respectivement une extrémité d'un tube et une extrémité de l'autre tube.

Conformément à l'invention, les tubes sont munis avant assemblage de revêtements extérieurs respectifs (R1 , R2) étanches et thermiquement isolants conformés et dimensionnés en sorte qu'après assemblage, ils ne laissent entre eux qu'un intervalle nul ou de faible épaisseur.

Les revêtements sont réalisés par moulage et durcissement de matériaux appropriés, par exemple des matériaux en résines élastomères, type « hyperlast », ou autres, à base de silicone ou de polyuréthanne associé à une charge améliorant le coefficient d'isolation de type ci-dessus.

Selon une particularité avantageuse de la présente invention, les tubes (T1, T2) sont munis de capuchons protecteurs provisoires (5, 6) emboîtés de façon détachable respectivement dans l'extrémité du tube femelle et sur l'extrémité du tube mâle pour protéger pendant le passage des tubes sur des rouleaux ou patins d'installation les surfaces de joint des revêtements.

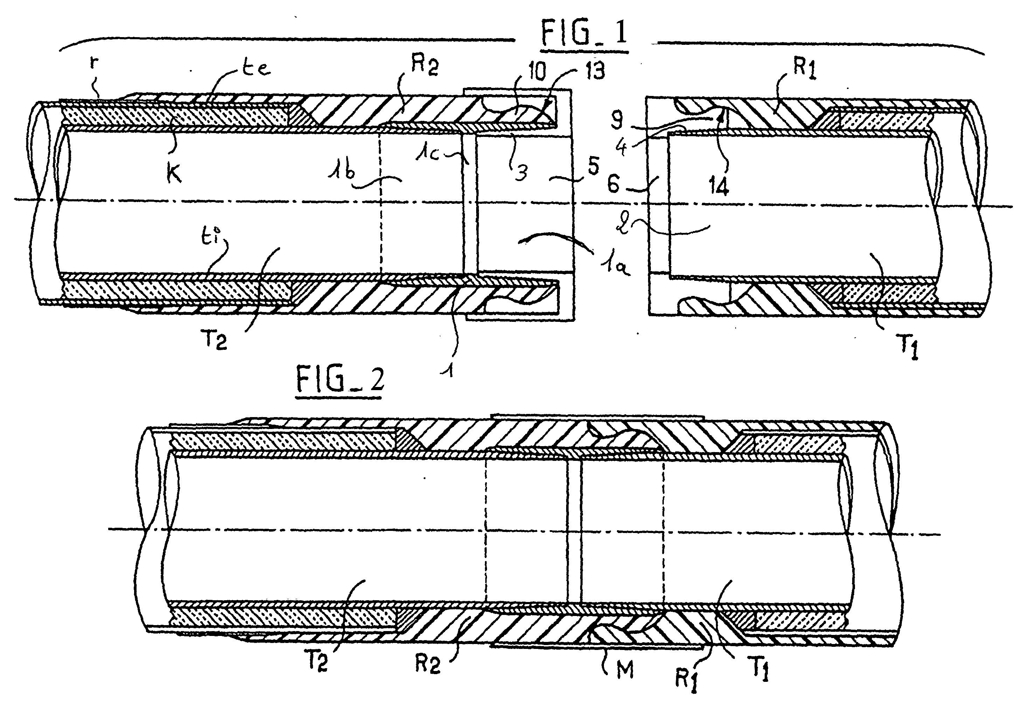

Dans les réalisations des figures 1 à 4, les revêtements sont en matériau élastomère et sont conformés pour présenter des surfaces qui seront en recouvrement du fait de l'assemblage.

Par exemple, l'un des revêtements détermine entre lui et le tube qui le porte un intervalle annulaire borgne (9) ouvert vers l'avant et l'autre revêtement présente une avancée annulaire (10) apte à pénétrer dans cet intervalle lorsque les tubes sont assemblés.

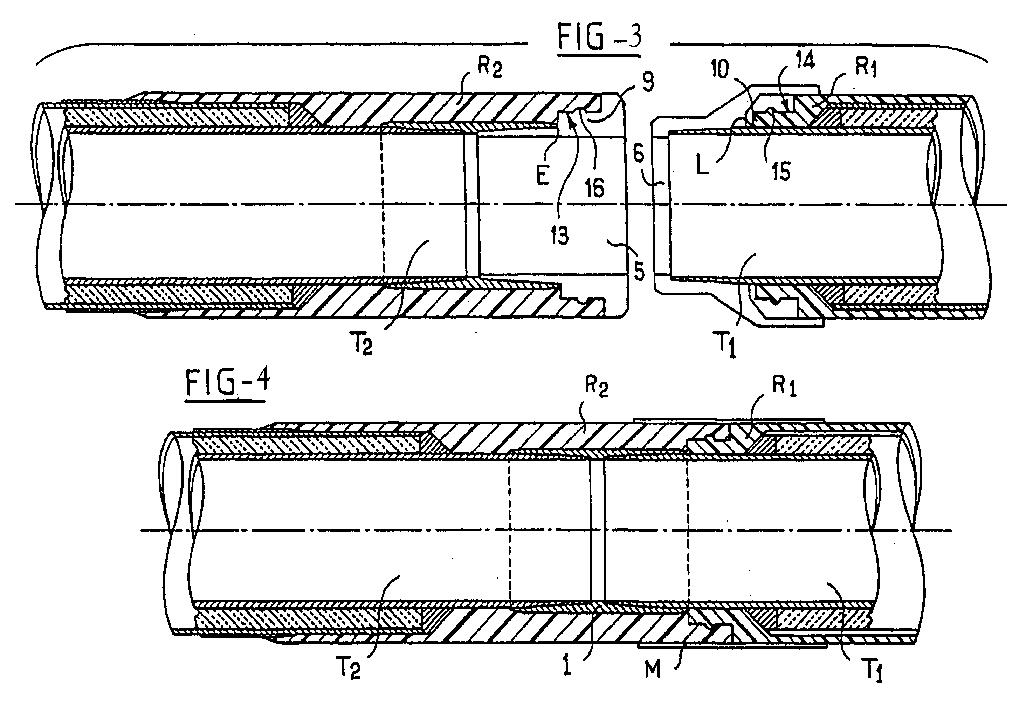

Dans le cas de la réalisation des figures 1 et 2, c'est le revêtement (R1) du tube mâle (T1) qui détermine un intervalle (9) tandis que c'est le revêtement (R2) du tube femelle (R2) qui présente une avancée (10) apte à se loger sous cette saillie, tandis que dans celui de la réalisation des figures 3 et 4, c'est le revêtement (R2) du tube femelle (T2) qui présente une saillie (11) en encorbellement vers l'avant tandis que le revêtement (R1) du tube mâle (T1) présente une avancée (12) apte à se loger sous la saillie (11).

Les formes des surfaces de joint en recouvrement (13,14) des revêtements sont complémentaires dans la zone de recouvrement, pour assurer une étanchéité sèche ou avec apport de graisse, ou de colle ou de colle-graisse.

Elles sont par exemple sinueuses (figures 1 et 2) ou en gradins (figures 3 et 4).

De préférence, les surfaces de joint présentent l'une un bossage (15) et l'autre un creux correspondant (16) (figures 3 et 4).

Un manchon (M), de préférence en matériau thermorétractable, est disposé sur la zone d'assemblage.

Dans les exemples représentés sur les dessins, chaque tube est constitué d'un tube métallique interne (tᵢ) et d'un tube métallique externe (tₑ) soudé au tube interne avec interposition entre les deux tubes d'un matériau isolant (K).

Une matière de protection (r) recouvre le tube externe.

Le tube interne dépasse à l'avant le tube externe et le revêtement appliqué suivant l'invention recouvre au moins partiellement ou totalement la partie dépassante du tube interne et recouvre une partie du tube externe.

L'invention n'est pas limitée à cette structure particulière des tubes.

## Revendications

1. Procédé pour réaliser sur barge ou chantier l'assemblage de deux tubes d'une conduite en mer et l'isolation de la zone d'assemblage au moyen d'un revêtement extérieur thermiquement isolant, étanche à l'eau et résistant à la pression extérieure, obtenu par durcissement d'un produit appliqué sur les tubes, dans lequel on utilise des tubes métalliques (T1,T2) assemblables mécaniquement Jusque dans des positions relatives finales prédéterminées, et on réalise sur les extrémités d'assemblage des tubes, avant leur assemblage, des revêtements extérieurs d'isolation et d'étanchéité individuels (R1,R2) conformés et dimensionnés en sorte que dans lesdites positions relatives finales prédéterminées les revêtements soient en continuité ou en quasi-continuité, on assemble les tubes ainsi revêtus et on comble s'il y a lieu l'intervalle résiduel éventuel entre les revêtements au moyen d'une colle ou d'un mastic, **caracterisé en ce que** les revêtements sont conformés et dimensionnés pour pénétrer partiellement l'un dans l'autre lors de l'assemblage en présentant des surfaces de recouvrement (13,14).

2. Procédé selon la revendication 1, dans lequel les revêtements sont conformés pour présenter des surfaces de recouvrement respectives (13,14) de formes sinueuses ou en créneaux complémentaires.

3. Procédé selon la revendication 1 ou 2 dans lequel les revêtements sont en matériau élastomère.

4. Procédé selon l'une des revendications 1 à 3, dans lequel on applique une graisse sur les surfaces de recouvrement des revêtements afin de faciliter la pénétration d'un revêtement dans l'autre pendant l'assemblage.

5. Procédé selon l'une des revendications 1 à 4, dans lequel on protège provisoirement les surfaces de recouvrement (13,14) des revêtements au moyen de capuchons amovibles (5,6) emboîtés dans ou sur les tubes et que l'on retire avant assemblage.

6. Procédé selon l'une des revendications 1 à 5, dans lequel après assemblage. on entoure la zone d'assemblage d'un manchon thermorétractable (M).

7. Tubes de canalisation métalliques pour la mise en oeuvre d'un procédé selon l'une des revendications 1 à 6, **caractérisés en ce qu'**ils sont aptes à être assemblés par introduction et fixation d'une extrémité d'assemblage mâle et d'un tube (T1) dit tube mâle, sur une certaine longueur, dans une extrémité d'assemblage femelle de l'autre tube (T2), dit tube femelle, et **en ce que** les extrémités d'assemblage des tubes sont munies avant assemblage de revêtements extérieurs respectifs (R1 , R2) thermiquement isolants, étanches à l'eau et résistants à la pression extérieure, conformés et dimensionnés en sorte qu'après assemblage, les revêtements ne laissent entre eux qu'un intervalle nul ou de faible épaisseur, **caractérisés en ce que** le revêtement de l'extrémité d'assemblage de l'un des tubes détermine entre lui et le tube métallique qui le porte un intervalle annulaire borgne (9) ouvert vers l'avant et le revêtement de l'extrémité d'assemblage de l'autre tube présentant une avancée annulaire (10) apte à pénétrer à friction dans cet intervalle lorsque les tubes sont assemblés en sorte que les revêtements présentent des surfaces en recouvrement (13,14).

8. Tubes de canalisation selon la revendication 7, dans lesquels l'extrémité d'assemblage femelle est déterminée par une extrémité femelle (la) d'un connecteur (1) intégré au tube métallique (T2) par exemple par vissage, tandis que l'extrémité d'assemblage mâle est déterminée par une extrémité (2) du tube métallique mâle (T1) lui-même.

9. Tubes de canalisation selon la revendication 7 ou 8, dont lesdits revêtements extérieurs sont en matériau élastomère.

10. Tubes de canalisation selon la revendication 7, dans lesquels les surfaces en recouvrement (13,14) des revêtements présentent l'une ou plusieurs bossages (15) et l'autre un ou des creux correspondants (16).

11. Tubes de canalisation selon l'une des revendications 7 à 10, et qui comportent des capuchons amovibles (5,6) emboités dans ou sur les extrémités d'assemblage munies de leurs revêtements pour protéger les surfaces de joint (13,14) des revêtements.

## Patentansprüche

1. Verfahren zum Verbinden zweier Röhren einer Leitung auf Plattformen oder Baustellen auf offener See und zur Isolation der Verbindungszone mittels einer thermisch isolierenden, wasserdichten und dem Außendruck standhaltenden Außenummantelung, welche durch Aushärtung eines auf die Röhren aufgebrachten Materials erhalten wird, bei dem Metallröhren (T1, T2) verwendet werden, die mechanisch verbunden werden können, bis sie vorgegebene Relativ-Endpositionen einnehmen, und vor dem Verbinden an den Verbindungsenden der Röhren individuelle isolierende und abdichtende Außenummantelungen (R1, R2) angebracht werden, die so ausgelegt und dimensioniert sind, daß in den vorgegebenen Relativ-Endpositionen die Ummantelungen lückenlos oder quasi-lückenlos ineinander übergehen, die derart ummantelten Röhren verbunden werden und wenn nötig der eventuell verbleibende Zwischenraum zwischen den Ummantelungen mit einem Klebstoff oder Abdichtmittel ausgefüllt wird, **dadurch gekennzeichnet, daß** die Ummantelungen so ausgelegt und dimensioniert sind, daß sie beim Verbinden teilweise ineinander eindringen, wobei sie Überlappungsflächen (13, 14) aufweisen.

2. Verfahren nach Anspruch 1, bei dem die Ummantelungen derart ausgelegt sind, daß sie jeweilige Überlappungsflächen (13, 14) in sinusförmiger Gestalt oder in komplementärer Rechteckform aufweisen.

3. Verfahren nach Anspruch 1 oder 2, bei dem die Ummantelungen aus elastomerem Material sind.

4. Verfahren nach einem der Ansprüche 1 bis 3, bei dem ein Schmierfett auf die Überlappungsflächen aufgetragen wird, um das Eindringen einer Ummantelung in die andere beim Verbinden zu erleichtern.

5. Verfahren nach einem der Ansprüche 1 bis 4, bei dem die Überlappungsflächen (13, 14) der Ummantelungen provisorisch mittels abnehmbarer Kappen (5, 6) geschützt werden, welche in oder auf die Röhren gesteckt und vor der Verbindung abgenommen werden.

6. Verfahren nach einem der Ansprüche 1 bis 5, bei dem nach dem Verbinden die Verbindungszone mit einer wärmeschrumpfenden Hülse (M) umgeben wird.

7. Metallische Leitungsrohre für die Durchführung eines Verfahrens nach einem der Ansprüche 1 bis 6, **dadurch gekennzeichnet, daß** sie durch Einführung und Befestigung eines männlichen Verbindungsendes und einer Röhre (T1), welche als männliche Röhre bezeichnet wird, über eine bestimmte Länge in ein weibliches Verbindungsende der anderen Röhre (T2), welche als weibliche Röhre bezeichnet wird, verbunden werden können, und dadurch, daß die Verbindungsenden der Röhren vor dem Verbinden mit entsprechenden thermisch isolierenden, wasserdichten und dem Außendruck standhaltenden Außenummantelungen (R1, R2) versehen werden, welche so ausgelegt und dimensioniert sind, daß die Ummantelungen nach dem Verbinden keinen oder nur einen geringen Zwischenraum bestehen lassen, **dadurch gekennzeichnet, daß** die Ummantelung des Verbindungsendes einer der Röhren zwischen sich und der sie tragenden Metallröhre einen ringförmigen Blindzwischenraum (9) definiert, der nach vorne hin offen ist, und die Ummantelung des Verbindungsendes der anderen Röhre einen ringförmigen Vorsprung (10) aufweist, der wenn die Röhren verbunden werden in diesen Zwischenraum unter Reibung derart eindringen kann, daß die Ummantelungen Überlappungsflächen (13, 14) aufweisen.

8. Leitungsrohre nach Anspruch 7, bei welchen das weibliche Verbindungsende durch ein weibliches Ende (la) eines Verbindungsstücks (1) gegeben ist, das beispielsweise durch Verschraubung in die Metallröhre (T2) integriert wird, wogegen das männliche Verbindungsende durch ein Ende (2) der männlichen Metallröhre (T1) selbst gegeben ist.

9. Leitungsrohre nach Anspruch 7 oder 8, deren Außenummantelungen aus elastomerem Material sind.

10. Kanalisationsrohre nach Anspruch 7, bei welchen eine der Überlappungsflächen (13, 14) der Ummantelungen einen oder mehrere Vorsprünge (15) aufweist, und die andere eine oder mehrere entsprechende Vertiefungen (16) aufweisen.

11. Leitungsrohre nach einem der Ansprüche 7 bis 10, welche abnehmbare Kappen (5, 6) aufweisen, die in oder auf die mit ihren Ummantelungen versehenen Verbindungsenden gesteckt werden, um die Überlappungsflächen (13, 14) der Ummantelungen zu schützen.

## Claims

1. A method of assembling two tubes of a sea pipe-line on a barge or on land, and of insulating the assembly zone by means of a thermally insulating outer coating that is watertight and that withstands external pressure, the coating being obtained by allowing a substance applied to the tubes to harden, in which method use is made of metal tubes (T1, T2) that can be assembled together mechanically to predetermined final relative positions, and prior to assembly, individual insulating and sealing coatings (R1, R2) are made on the assembly ends of the tubes, said coatings being shaped and dimensioned in such a manner that in said predetermined final relative positions they are continuous or quasi-continuous, the tubes coated in this way are assembled together, and if any residual gap remains between the coatings, it is filled with an adhesive or a sealing compound, the method being **characterized in that** the coatings are shaped and dimensioned so as to penetrate in part one into the other during assembly, thereby presenting overlapping surfaces (13, 14).

2. A method according to claim 1, in which the coatings are shaped to present respective overlapping surfaces (13, 14) of complementary crenellated or corrugated shapes.

3. A method according to claim 1 or claim 2, in which the coatings are made of elastomer material.

4. A method according to any one of claims 1 to 3, in which grease is applied to the overlapping surfaces of the coatings so as to facilitate the penetration of one coating into the other during assembly.

5. A method according to any one of claims 1 to 4, in which the overlapping surfaces (13, 14) of the coatings are protected temporarily by means of removable caps (5, 6) engaged on or in the tubes, which caps are removed prior to assembly.

6. A method according to any one of claims 1 to 5, in which, after assembly, the assembly zone is surrounding by a heat-shrink sleeve (M).

7. Metal piping tubes for implementing a method according to any one of claims 1 to 6, **characterized in that** they are suitable for being assembled together by inserting and fixing a male assembly end and a "male" tube (T1) a certain distance into a female assembly end of the other tube (T2) referred to as the "female" tube, and **in that** the assembly ends of the tubes are provided, prior to assembly, with respective outer coatings (R1, R2) that are thermally insulating, waterproof, and that withstand external pressure, the coatings being shaped and dimensioned in such a manner that after assembly they leave between them a gap of small or zero width, **characterized in that** the coating of the assembly end of one of the tubes defines a blind annular gap (9) between itself and the metal tube which carries it, said gap being forwardly open, while the coating of the assembly end of the other tube presents an annular projection (10) suitable for penetrating with friction into the gap when the tubes are assembled together so that the coatings present overlapping surfaces (13, 14).

8. Piping tubes according to claim 7, in which the female assembly end is defined by a female end (1 a) of a connector (1) integrated with the female tube (T2) by screwing, for example, while the male assembly end is defined by one end (2) of the male metal tube (T1) itself.

9. Piping tubes according to claim 7 or claim 8, in which said outer coatings are of elastomer material.

10. Piping tubes according to claim 7, in which one of the overlapping surfaces (13, 14) of the coatings presents one or more bulges (15) while the other presents one or more corresponding indentations (16).

11. Piping tubes according to any one of claims 7 to 10, having removable caps (5, 6) engaged on or in the assembly ends provided with their coatings to protect the joint surfaces (13, 14) of the coatings.
